# EUROPEAN PATENT SPECIFICATION

(11) **EP 1 924 472 B1**
(45) Date of publication and mention of the grant of the patent: **21.09.2011**
(21) Application number: 06795267.1
(22) Date of filing: 14.08.2006
(51) Int. Cl.: B60S 9/08

(54) **VEHICLE LIFTING AND/OR STABILISING DEVICE, RELATIVE SYSTEM AND PROCESS**
FAHRZEUGHEBE- UND/ODER -STABILISIERVORRICHTUNG, ENTSPRECHENDES SYSTEM UND VERFAHREN
DISPOSITIF DE LEVAGE ET/OU DE STABILISATION DE VEHICULES; SYSTEME ET METHODE S'Y RAPPORTANT

(30) Priority: 22.08.2005 IT VI20050233
(43) Date of publication of application: 28.05.2008
(73) Proprietor: ARES Engineering S.R.L., 36010 Carre' (IT); Brun, Giancarlo, 36016 Thiene VI (IT)
(72) Inventor: BRUN, Giancarlo, I-36016 Thiene (IT)
(74) Representative: Ziliotto, Tiziano
(86) International application number: PCT/IB2006/002239
(87) International publication number: WO 2007/023347

(56) References cited:
- DE-A1- 3 526 041
- GB-A- 2 094 732
- US-A- 3 442 531
- US-A- 4 619 369
- US-A- 4 969 631
- US-A- 5 013 011
- DATABASE WPI Week 198334 Derwent Publications Ltd., London, GB; AN 1983-745189 XP002407590 -& SU 965 975 A (FOREST POWER MECHN INST) 15 October 1982 (1982-10-15)

## Description

The invention concerns a vehicle lifting and/or stabilising device, particularly suitable for installation on motor vehicles, motor caravans and trailers for the lifting and parking thereof. A device according to the preamble of claim 1 is known from US 5 013 011.

As is known, some vehicles such as lorries, motor caravans, motor homes, vehicles fitted out for itinerant trading etc. are provided with lifting and stabilising devices.

Said devices are fixed to the vehicle chassis and are used to lift it from the ground during garaging or parking and discharge the weight onto the ground, at least partially, without burdening the suspension.

The suspension organs and the tyres are thus relieved, at least partially, of the load they support which tends, in the long term, to gradually reduce the effectiveness thereof.

Said devices are generally, but not necessarily, installed in pairs, at the front and rear of the vehicle and can be operated independently to permit levelling of the vehicle even on ground which is not perfectly level.

In the case of caravans or vehicles fitted out for itinerant trading, use of the above-mentioned devices increases comfort and reduces the swaying and rocking to which the vehicle is subject while it is parked due to the movement of the occupants. They furthermore allow the vehicle to be kept level, permitting better operation of the on-board equipment and the sink drains.

The known stabilisation devices substantially comprise a fixing element for anchoring the device to the vehicle chassis and lifting means provided with a retractable supporting element.

The lifting means comprise an actuator suitable for vertically lowering/raising the supporting element to move it from the work position, in contact with the ground, to a raised rest position.

The actuator generally consists of a jack controlled by a corresponding power and control unit.

To raise the vehicle, the user operates the actuator via the control unit, lowering the supporting element until the vehicle has been raised.

Vice versa, to lower the vehicle the user operates the actuator again via the control unit, retracting the supporting element and raising it until it is in the rest position.

Some devices, to reduce their overall dimensions in the retracted position, provide for the lifting means to be connected to the fixing element by articulation means which permit the folding thereof.

More precisely, said articulation means consist of a hinge which allows the jack to rotate around a horizontal axis to a position parallel to the ground, to a vertical position and resting against the fixing element.

A first drawback of the devices of known type consists in the fact that the articulation means weaken the device, limiting the transverse loads that can be withstood. This causes instability of the vehicle in its raised position. In fact it tends to sway crosswise and/or lengthways when stressed with the clear risk of falling off the lifting device.

A further drawback connected with the preceding one consists in the fact that, to prevent the vehicle falling off, it is not raised completely from the ground with obvious disadvantages. The aim of the present invention is to overcome said drawbacks.

In particular a first object of the invention is to produce a lifting and/or stabilising device particularly suitable for installation on motorised and non-motorised vehicles, such as lorries, trailers, motor caravans, motor homes and vehicles fitted out for itinerant trading.

A further object is to produce a folding device which, with respect to the known devices, is more insensitive to transverse stress and guarantees the vehicle greater stability and equilibrium, also in the presence of said stress.

A further object is to produce a device which permits the vehicle to be raised even completely, guaranteeing the stability thereof.

A further object is to produce a folding device which can be installed simply and quickly, applicable to the chassis of any vehicle.

A further object is to produce a device that does not require housing recesses for its installation.

A further object is to produce a device that can be easily removed and fitted on another vehicle.

A further object is to produce a lifting device and system that permits rapid easy levelling of the vehicle, useful also to compensate for any irregularities in the ground.

A further object is to produce a device which, by lifting, even only partial, of the vehicle from the ground, causes immobilisation of the vehicle, thus acting as an anti-theft device.

A further object is to produce a device which, by lifting the vehicle, is able to lighten, partially or totally, the load on the tyres, preventing from becoming out-of-round during prolonged standstills.

Last but not least, a further object is to produce a lifting device and a system which is inexpensive and easy to use, in addition to being easy to construct, assemble and install, suitable also for mass production.

Said objects are achieved by a lifting and/or stabilising device, by a lifting and/or levelling system and by a process for lifting a vehicle, expressed and characterised in the respective independent claims.

Advantageous embodiments constitute the subject of the dependent claims.

The solution proposed advantageously permits the production of a lifting and/or stabilising device able to withstand greater transverse loads and stress than the known devices.

Again advantageously the device proposed has minimum overall dimensions in the rest position, at the same time guaranteeing, during use, the stability and equilibrium of the vehicle also when the wheels are raised.

Said objects and advantages will be better highlighted during the description of some preferred embodiments of the invention, provided for indicative nonlimiting purposes, with reference to the attached drawings in which:
- figure 1 shows a lateral view of a device of the invention in a rest position;
- figure 2 shows a lateral view of the device of figure 1 in a different work position;
- figure 3 shows an axonometric exploded view of the device of figure 1;
- figure 4 shows an axonometric view of an element of the device of figure 1;
- figure 5 shows a view of a longitudinal section of the element of figure 4;
- figure 6 shows an axonometric view of another element of the device of figure 1;
- figure 7 shows a view of a longitudinal section of the element of figure 6;
- figure 8 shows an axonometric view of a partial longitudinal section of the device of figure 1;
- figure 9 shows a lateral view of another device of the invention in a rest position;
- figure 10 shows a lateral view of the device of figure 9 in a different work position;
- figure 11 shows an axonometric exploded view of the device of figure 9;
- figure 12 shows an axonometric view of an element of the device of figure 9;
- figure 13 shows a view of a longitudinal section of the element of figure 12;
- figure 14 shows an axonometric view of another element of the device of figure 9;
- figure 15 shows a view of a longitudinal section of the element of figure 14;
- figure 16 shows a lateral view of a further device of the invention in a rest position;
- figure 17 shows an axonometric view of the device of figure 16 in a work position;
- figure 18 shows an axonometric view of the device of figure 16 in another extended work position;
- figure 19a shows an axonometric view of an executive variation of the element of figure 12;
- figure 19b shows a plan view of the element of figure 19a;
- figure 19c shows an axonometric view of an executive variation of the element of figure 14;
- figure 19d shows a view from below of the element of figure 19c;
- figure 19e shows an axonometric view of another executive variation of the element of figure 12;
- figure 19f shows a plan view of the element of figure 19e;
- figure 19g shows an axonometric view of an executive variation of the element of figure 14;
- figure 19h shows a view from below of the element of figure 19g;
- figure 20 shows the device of figure 1 in a work phase;
- figure 21 shows a first lateral view of the device of figure 1 in another work position;
- figure 22 shows a second view of the device of figure 1 in the same work position as shown in figure 21;
- figure 23 shows a first lateral view of the device of figure 1 in a further work position;
- figure 24 shows a second view of the device of figure 1 in the same work position as shown in figure 23;
- figure 25 shows a first lateral view of the device of figure 1 in another work position;
- figure 26 shows a second view of the device of figure 1 in the same work position as shown in figure 25;
- figure 27 shows the device of figure 9 in a work phase;
- figure 28 shows a first lateral view of the device of figure 9 in another work position;
- figure 29 shows a second view of the device of figure 9 in the same work position as shown in figure 28;
- figure 30 shows a first lateral view of the device of figure 9 in a further work position;
- figure 31 shows a second view of the device of figure 1 in the same work position as shown in figure 30;
- figure 32 shows a first lateral view of the device of figure 9 in another work position;
- figure 33 shows a second view of the device of figure 1 in the same work position as shown in figure 32;
- figure 34 shows a block diagram of a vehicle lifting/levelling system, also subject of the invention.

By way of introduction, it is highlighted that the equal parts of the individual executive examples are provided with the same reference numbers. In the case of a variation of the position of said parts, the indications mentioned in the individual executive examples must be transferred, according to sense, to the new position.

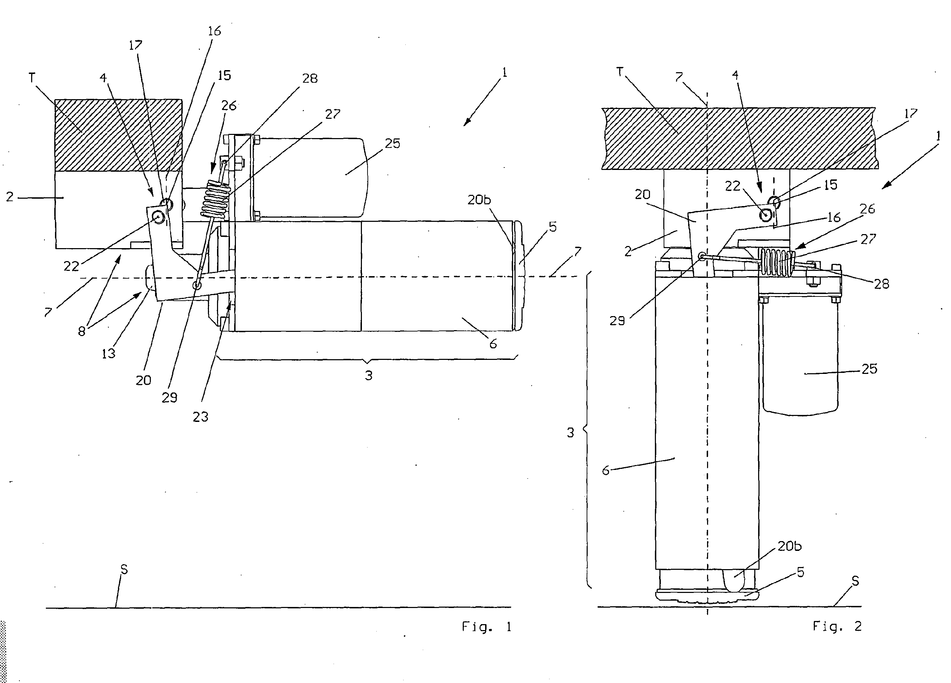

A lifting and/or stabilising device for vehicles in general, subject of the present invention, is shown in figures 1 to 3, where it is indicated overall by number 1.

It comprises a fixing element 2 for anchoring the device 1 to the chassis T of a vehicle not shown and means 3 for lifting the vehicle, connected to the element 2 by articulation means, indicated overall by number 4.

The lifting means 3 are provided with a retractable supporting element 5 and comprise an actuator 6 suitable for moving said supporting element 5 along a lifting axis 7 to lift the vehicle.

The articulation means 4 are suitable for enabling the lifting means 3 to move from at least one first folded position, in which said lifting axis 7 is substantially horizontal and/or parallel to the ground S, shown in figure 1, to at least one second position in which the lifting axis 7 is in a position substantially vertical and/or square to the ground S, shown in figure 2.

According to the invention the device 1 furthermore comprises connection means, indicated overall by number 8, suitable for rigidly connecting the lifting means 3 to the fixing element 2 during lifting of the vehicle and for guaranteeing almost equal resistance to loads parallel to the ground, regardless of their direction.

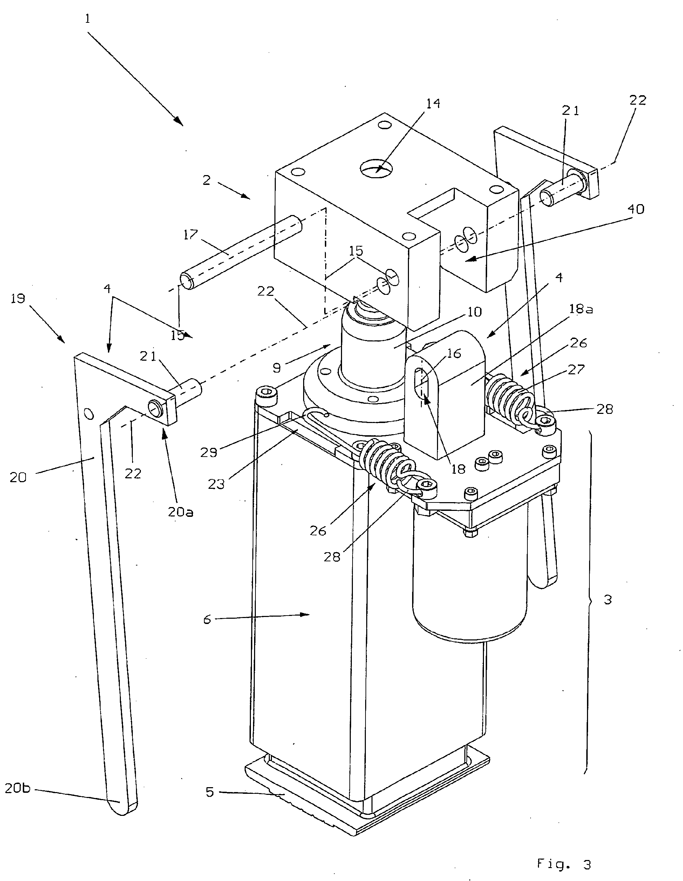

In the embodiment example shown, said connection means 8 comprise a male-female type coupling, which can be seen in detail in figures 3 to 7, which provides for a first connection element 9 integral with the lifting means 3 suitable for coupling with a second connection element 11 integral with the fixing element 2.

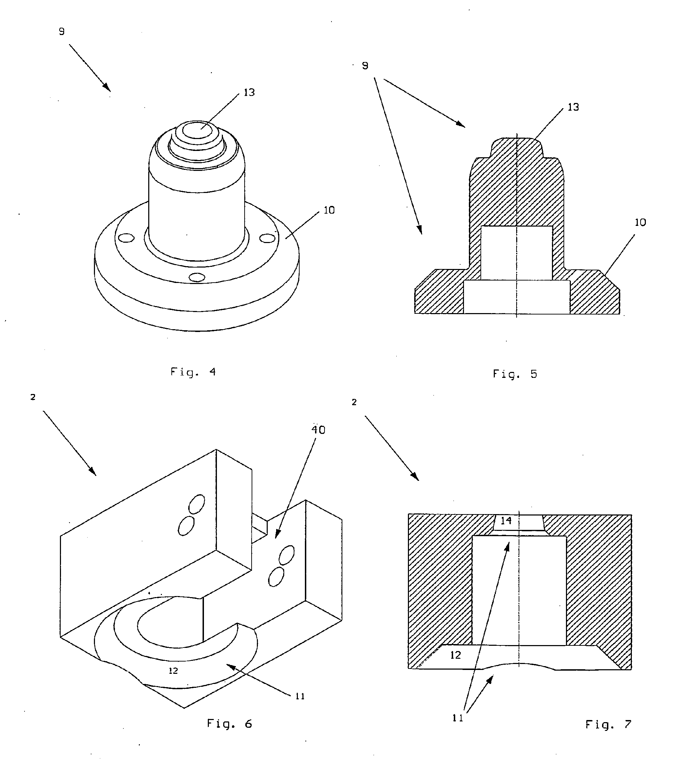

In particular the first element 9, male, comprises a truncated cone-shaped head 10, shown in detail in figures 4 and 5, while the second element 11, female, comprises a corresponding truncated cone-shaped seat 12 with substantially conjugate profile, shown in figures 6 and 7, provided in the fixing element 2.

It should be observed that in the embodiment shown, the male element 9 presents, furthermore, a projecting element 13 suitable for being housed in a corresponding seat 14 of the female element 11, which can be seen in figure 7. The tapered or cylindrical shape of the conjugate surfaces of the male element 9 and female element 11 guarantee the almost uniform resistance of the coupling to loads parallel to the ground, regardless of their direction. The two coupling areas, i.e. the truncated cone-shaped head 10 in the seat 12 and the element 13 in the seat 14, positioned at an appropriate distance, provide a resistant coupling with a limited engagement stroke.

Observe also the presence of a side aperture 40 of the female element 11 which permits coupling/decoupling of the connection means 8 using a very small fraction of the stroke of the actuator 6.

As regards the articulation means 4, they substantially comprise a joint which can be seen in figures 1, 2 and 3, with at least two degrees of freedom, which allows the lifting means 3 to rotate with respect to a first axis 15 substantially horizontal and to translate along a second axis 16 substantially square or transverse to the first one to permit, as will be seen better below, coupling and decoupling of the two connection elements 9 and 11.

In the embodiment shown, the joint, which can be seen in particular in figure 3, is made of a pin 17 integral with the fixing element 2 which engages in a shaped through hole 18 provided in a bracket 18a integral with the lifting means 3.

The means 3 can thus rotate around the first axis 15 substantially horizontal and/or parallel to the ground S identified by the pin 17, and translate along the second axis 16 substantially square to the first axis 15.

The articulation means 4 furthermore comprise at least one guide element 19, in the case in point two, provided, in the embodiment shown, with at least one guide rod 20.

The rod presents one first end 20a hinged to a pin 21 identifying a rotation axis 22 substantially parallel to the rotation axis 15 of the lifting means 3 and the other end 20b suitable for positioning in contact with the supporting element 5, to counter the movement thereof, as will be better described below, and to permit coupling and decoupling of the connection means, and support of the lifting means 3 in the rest position.

It should be observed that the rotation axis 22 of the rod 20 and the rotation axis 15 of the lifting means 3, in the case in point, are not coaxial. This advantageously permits exploitation of the movement of the element 5 to obtain both the rotation movement of the means 3 and blocking of the articulation means 4, as will be seen better below.

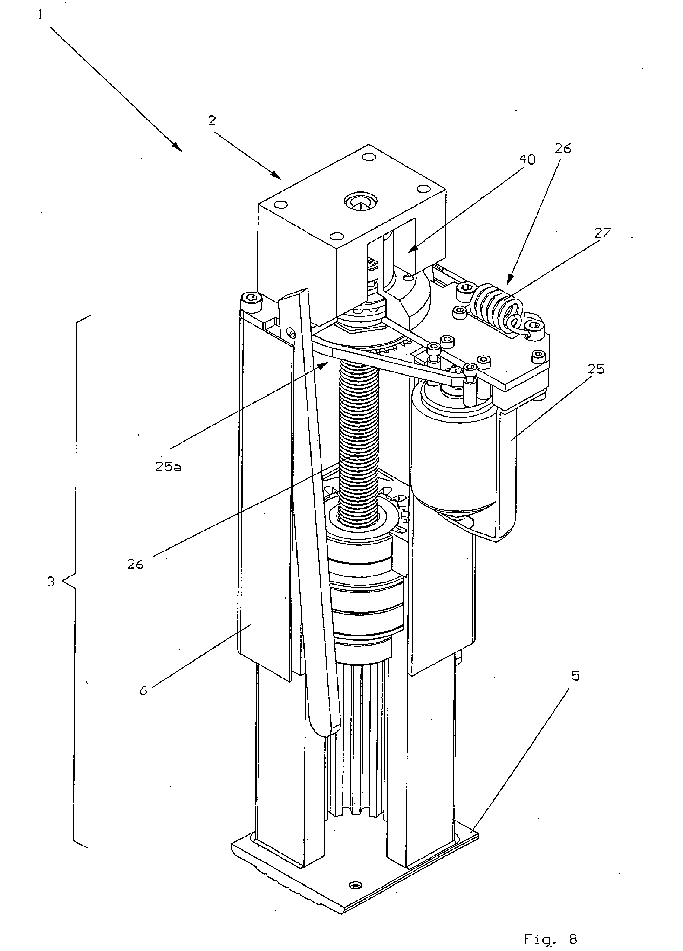

It should also be observed that each rod 20 is housed in a guide hole 23, which can be seen in detail in figure 3, which limits and guides the movement thereof. As regards the lifting means 3, they comprise, in the embodiment shown, a screw jack, shown in detail in figure 8 in a partially extended position, driven by an electric motor 25 which moves the screw 26 by means of mechanisms 25a.

The electric motor 25 is controlled by a control unit, not shown, which can be activated, according to a preferred embodiment, by means of a remote control device, for example a radiofrequency device.

The device furthermore comprises elastic means 26, which can be seen in figures 1 to 3, including, in the embodiment shown, of two helical springs 27 cooperating with the articulation means 4.

More precisely, each spring 27 has an end 28 integral with the lifting means 3 and the other end 29 integral with the guide rod 20.

Said elastic means 26, although not essential, contribute, as will be seen better below, to the movement and positioning substantially square to the ground of the lifting means 3.

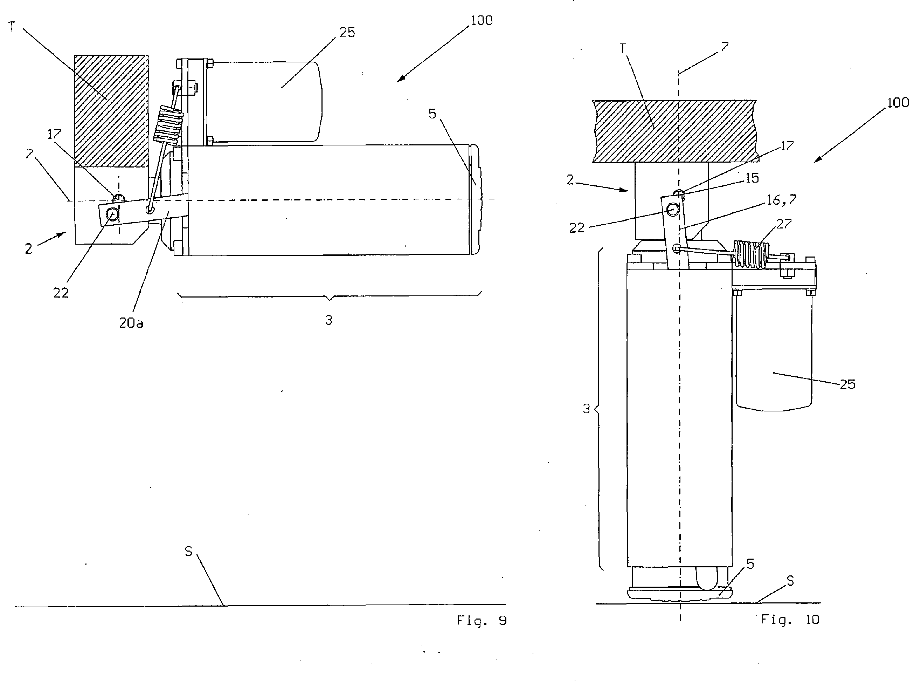

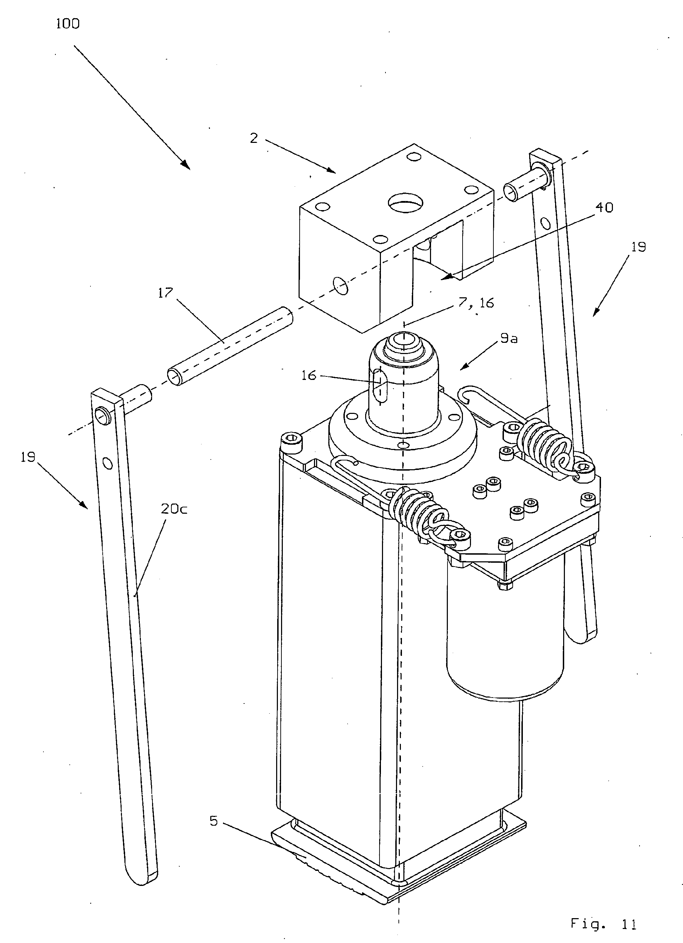

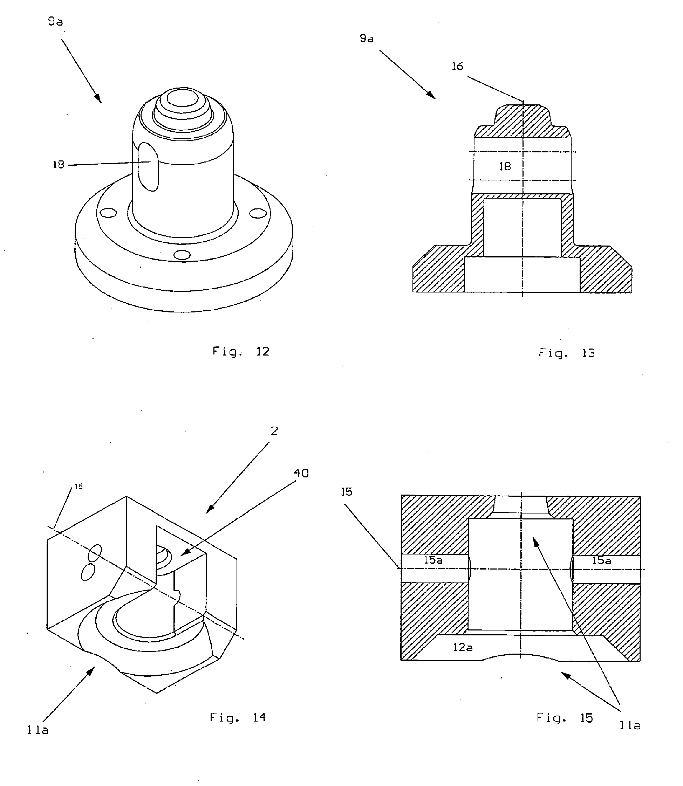

A further device subject of the present invention, indicated overall by number 100 in figures 9 to 11, differs from the preceding one due to the fact that the through hole 18 in which the pin 17 of the articulation means 4 engages is provided on the male connection element 9a, as shown in detail in figures 12 and 13. Consequently the seat 12a of the female element 11a, shown in detail in figures 14 and 15, has a through hole 15a suitable for accommodating the pin 17 which engages in the hole 18. In said embodiment the lifting axis 7 and the translation axis 16 identified by the articulation means 4 coincide during the lifting phase. The device 100 furthermore differs due to the fact that the guide elements 19 consist of rectilinear rods 20c.

Said solution advantageously permits elimination of the bracket 18a thus reducing the number of components of the device, increasing its compactness and simplifying construction. Also in said case the presence of the side aperture 40 in the female element 11 a has the function of permitting coupling/decoupling of the connection means 8 using a very small fraction of the stroke of the actuator 6.

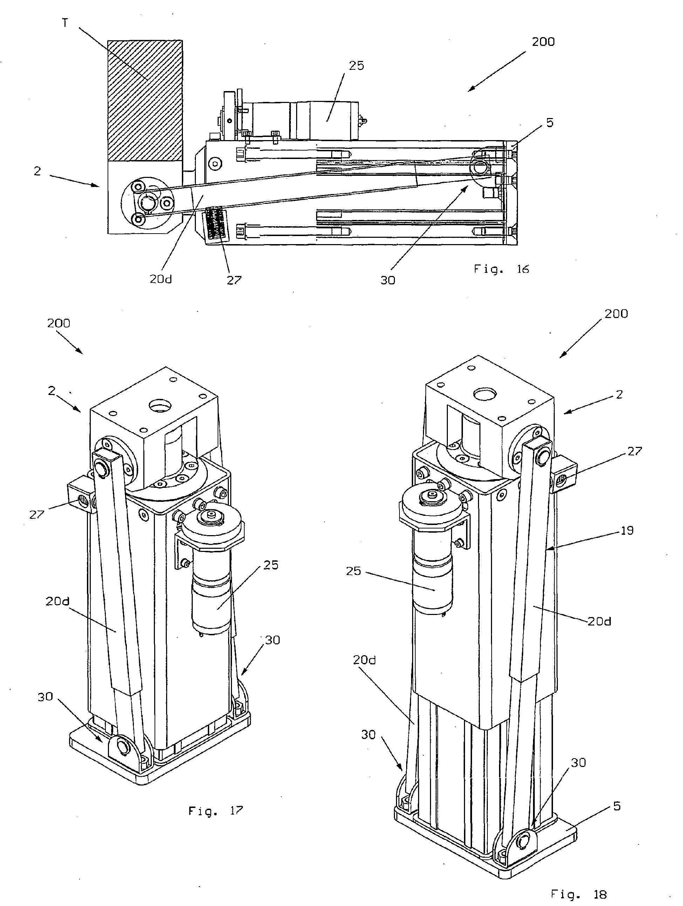

A further example of embodiment of the device of the invention, indicated overall by number 200 in figures 16 to 17, differs from the previous one due to the fact that the guide elements 19 comprise at least one telescopic rod 20d, in the case in point two, and that they connect the supporting element 5 to the fixing element 2.

More precisely each telescopic rod 20d is linked at the bottom to the supporting element 5 by means of a hinge 30.

Further non-claimed embodiments of the invention provide for different forms of the connection means 8 and in particular of the first and second elements, male/female, 9 and 11.

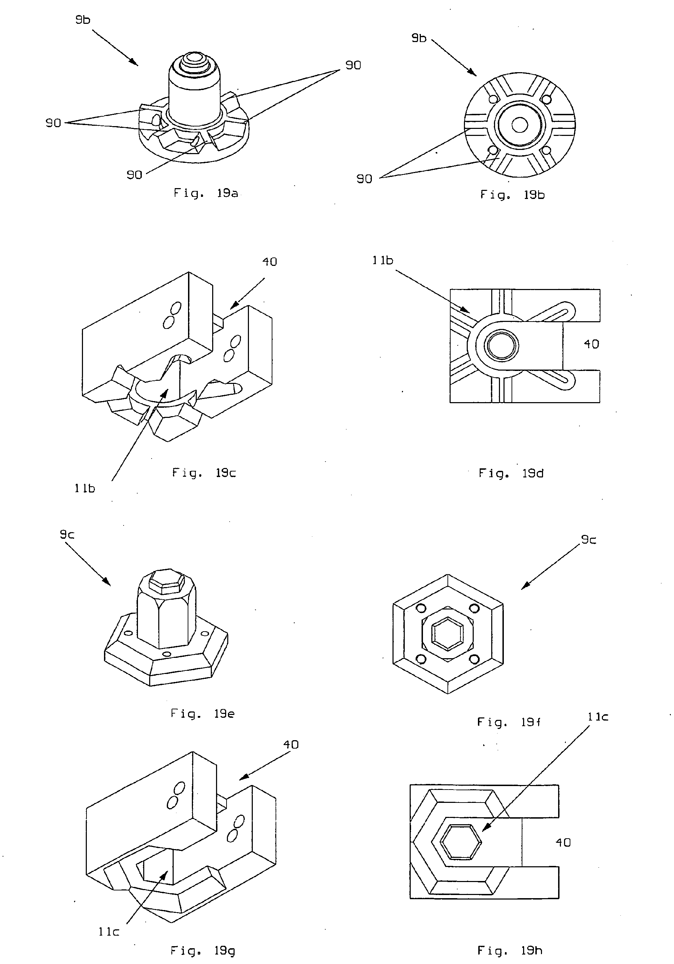

By way of example figures 19a to 19h show some different non-claimed embodiment of said elements.

In particular figures 19a and 19b show a male element, indicated overall by number 9b, provided with polygonal section teeth 90 suitable for coupling with a corresponding female element 11b shown in figures 19c and 19d.

Figures 19e and 19f show a further male element with polygonal base, indicated overall by number 9c, in particular hexagonal, which couples with a corresponding female element 11c provided with conjugate profile seats, shown in detail in figures 19g and 19h.

It is also clear that the male element can, in other embodiments not shown, be integral with the fixing element 2 and therefore the female element will be integral with the lifting means.

Operation of the device of the invention will now be described with reference to the first example of embodiment of the invention described and shown in figures 1 to 3, there being no substantial differences with respect to the other embodiments described.

To raise the vehicle or a part of it, the user operates, via the control unit, the device installed on the vehicle which is arranged in the rest position shown in figure 1.

The control unit thus powers the electric motor 25 which drives the jack 6, extending it.

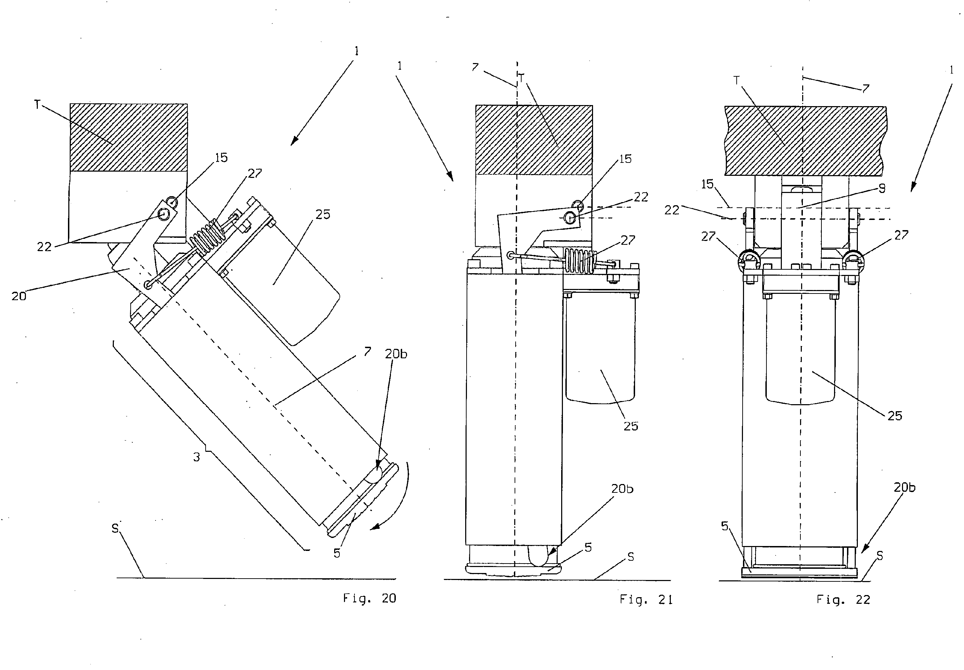

Extension of the jack 6 causes it, due to the action of the rods 20, to rotate around the axis 15, as shown in detail in figure 20.

Said rotation movement continues until the jack 6 is positioned with the lifting axis 7 in a position substantially square to the ground, as shown in detail in figures 2, 21 and 22. Reaching of the position substantially square to the ground is guaranteed by the action of the elastic means 26, which generate a force sufficient to remove any small obstacles on the ground S and to counter the gravity if the ground and the vehicle are on a slight slope.

It should be observed that in said phase the supporting element 5 is not yet in contact with the ground S and that the male elements 9 and female elements 11 are perfectly aligned but not coupled.

Continuing its movement, the motor further extends the jack 6 causing detachment of the rods 20 from the supporting element 5 and therefore stoppage of the rotation around the axis 15.

The further rotation of the motor 25 further lowers the supporting element 5 until it meets the ground S.

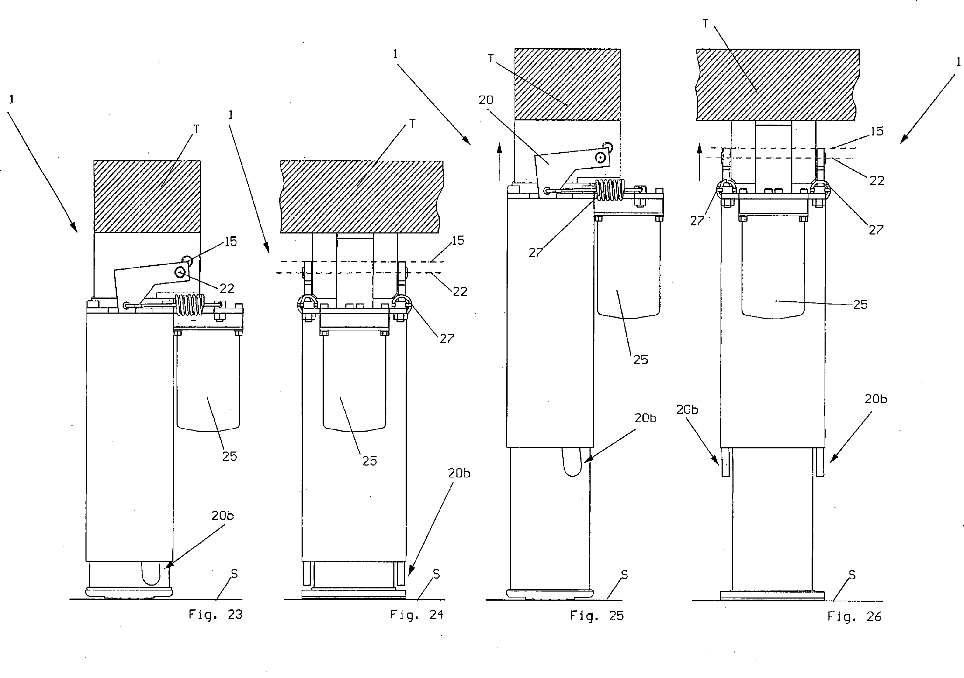

At this point the jack 6, continuing to extend and meeting the obstacle of the ground S, translates vertically, causing coupling of the male/female elements 9 and 11, as shown in detail in figures 23 and 24.

More precisely the pin 17 runs inside the slot 18 until the two elements 9 and 11 engage and block each other, making the connection between the lifting means 3 and the chassis T rigid.

Further operation of the device 1 causes the vehicle to be lifted from the ground S, as shown in detail in figures 25 and 26.

Having reached the required height, the user deactivates the device 1 which stays in the position reached.

To lower the vehicle the user operates the remote control by pressing the corresponding button, thus starting the lowering process which involves the same phases as those previously described, performed in reverse order.

More precisely, the control unit, having received the signal, rotates the motor 25 in the direction opposite to the one assumed during the lifting phase.

The vehicle thus begins to move down until it touches the ground.

The supporting element 5 then rises from the ground S until it encounters the rods 20.

Said rods 20, preventing the element 5 from moving further up, pull the male element 9 downwards thus obtaining decoupling of the two male and female elements 9 and 11 exerting, if necessary, also a force such as to overcome accidental jamming and seizure caused by dirt, impact deformations etc.

More precisely rotation of the motor 25 causes the jack 6 to move down until the pin 17 reaches the upper end of the shaped hole 18, configuring the device as shown in figures 21 and 22.

The further rotation of the motor 25 and the contrast of the element 5 with the rods 20 causes the jack 6 to rotate upwards, around the axis 15, resetting it to the initial position shown in figure 1.

A sensor, comprising a switch or a button not shown, detects that the rest position has been reached and automatically blocks the motor 25.

Having reached said position, the device subject to the traction force of the jack 6 and the counter action of the rods 20 remains stable in said position, ready for any new vehicle lifting operation.

It should be observed that advantageously the axis of rotation 22 of the rod 20 is positioned below the horizontal surface that intersects the rotation axis 15 of the lifting means 3 and in the semi-space formed by the vertical plane passing through the same rotation axis 15 which is not involved in rotation of the lifting means 3.

This advantageously allows the device 1 to perform the movement described, preventing the rod 20 positioning itself along the straight line joining the two rotation axes 15 and 22.

In said conditions, in fact, extension or retraction of the lifting means 3 due to operation of the motor 25 would not have any effect other than breakage of the device 1. It should be observed that advantageously the coupling of the two elements 9 and 11 is obtained by exploiting the extension of the jack 6 and that said coupling blocks the articulation means 4 making the connection between jack and chassis T rigid.

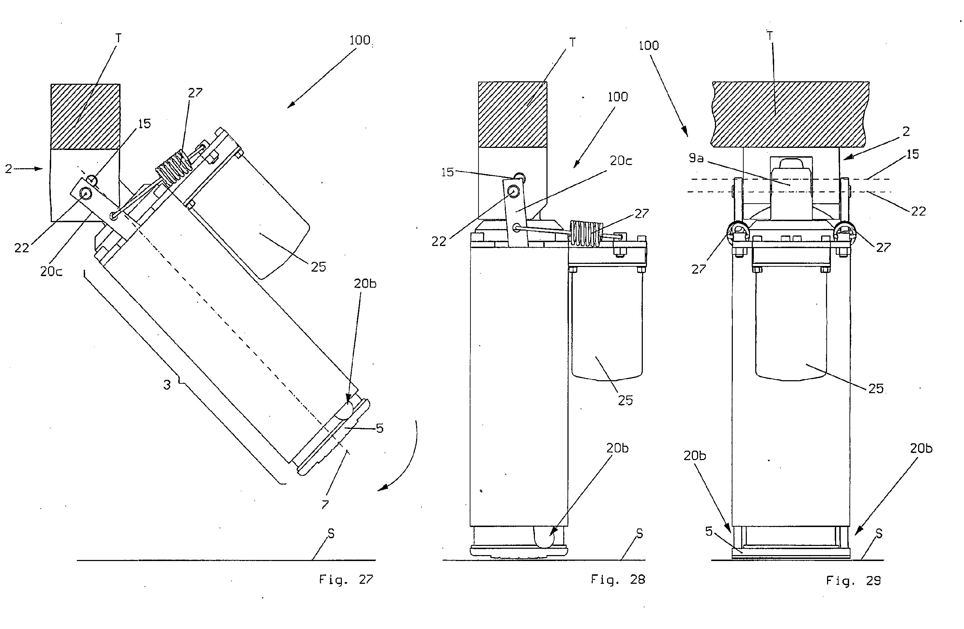

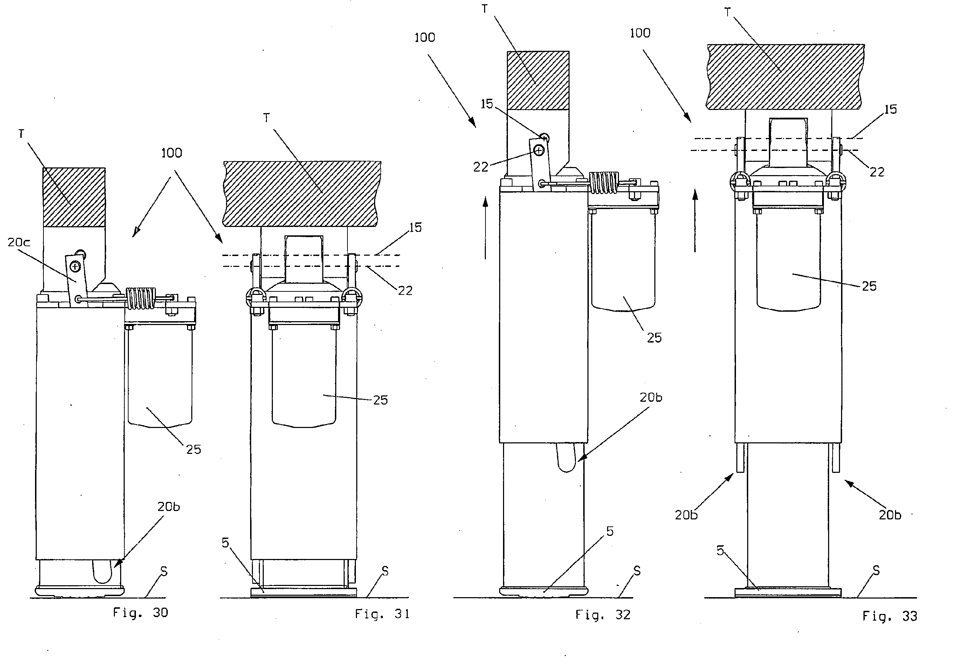

Figures 28 to 33 show the device 100 in the same raising/lowering operating phases as described for device 1.

From what has been said it is clear that the process for lifting a vehicle by means of a relative lifting and/or stabilisation device 1, 100, 200, according to the invention, provides, before the vehicle is lifted, for the lifting means to be connected rigidly to the fixing element, exploiting their movement, via a male-female coupling.

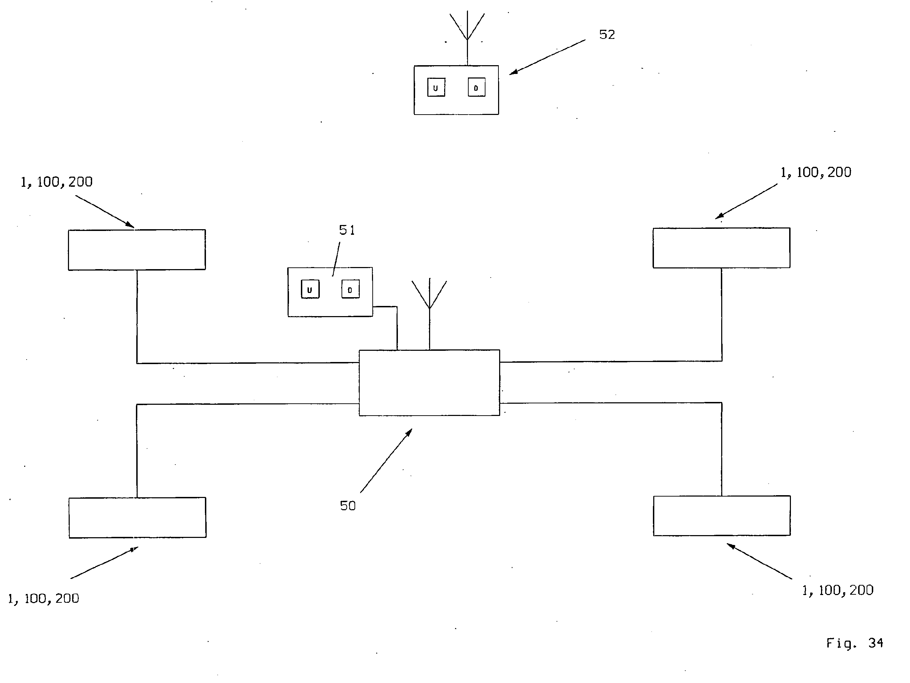

Figure 34 shows a lifting, stabilisation and levelling system comprising a control unit 50 which controls four devices 1, 100, 200 produced according to the invention.

In the case in point the control unit 50 comprises an apparatus, also called electronic spirit level, cooperating with a processing unit that drives the various devices.

The electronic spirit level is able to perceive any slanting of the vehicle in its two longitudinal and transverse axes and transit said information to the processing unit which adjusts the various lifting devices until the vehicle is levelled.

In the case in point the control unit 50 is furthermore provided with a control panel 51 for local activation and a radio receiver unit cooperating with a corresponding radio transmission unit 52, for remote activation of the device.

It should be observed that the energy required for operation of both the control unit and the actuator can advantageously be supplied by the vehicle electrical system and/or by additional accumulators and/or generators.

It is clear that, in other embodiments, the lifting means 3 can also be activated manually for example by means of a crank which, as it rotates, moves the worm screw via the mechanisms.

Again advantageously the actuator 6 can comprise, in other embodiments, a hydraulic or pneumatic jack or equivalent systems.

Experimental tests have shown that the device proposed, by blocking the articulation means before lifting the vehicle simply and automatically, guarantees greater insensitivity to the transverse stress to which the vehicle is subject when in the raised position.

Again advantageously it should be observed that the solution proposed allows part of the stroke of the jack to be used to obtain both automatic positioning of the device in the various work and rest positions and locking/release of the articulation means.

From what has been said it is clear that the solution proposed permits solving of said drawbacks and achievement of the set objectives.

Although the invention has been described with reference to the attached drawings, modifications can be made in the production phase, all falling within the claims below and therefore protected by the present patent.

## Claims

1. Lifting and/or stabilising device (1, 100, 200) for vehicles in general, comprising:
- at least one fixing element (2) for anchoring said device to said vehicle;
- lifting means (3) provided with an actuator (6) suitable for moving at least one supporting element (5) along a lifting axis (7) to lift said vehicle;
- articulation means (4) suitable for allowing said lifting means (3) to move from at least one first folded position, in which said lifting axis (7) is not square to the ground (S), to at least one second work position in which said lifting axis (7) is in a position substantially square to the ground (S);
- connection means (8) suitable for rigidly connecting said lifting means (3) to said fixing element (2) during lifting of said vehicle and comprising a male-female type coupling with a first connection element (9, 9a, 9b, 9c) and a second connection element (11, 11a, 11b, 11c) said first connection element (9, 9a, 9b, 9c) being suitable for coupling with said second connection element (11, 11a, 11b, 11c);
**characterised in that** said first element (9, 9a, 9b, 9c) comprises a truncated cone-shaped head (10) and said second element (11, 11a, 11b, 11c) comprises a corresponding truncated cone-shaped seat (12, 12c) with substantially conjugate profile.

2. Device according to claim 1) **characterised in that** said first connection element (9, 9a, 9b, 9c) is integral with said lifting means (3) and **in that** said second connection element (11, 11a, 11b, 11c) is integral with said at least one fixing element (2).

3. Device according to claim 1) **characterised in that** said first connection element (9, 9a, 9b, 9c) is integral with said at least one fixing element (2) and **in that** said second connection element (11, 11a, 11b, 11c) is integral with said lifting means (3).

4. Device according to one of claims 1) to 3) **characterised in that** said first element (9, 9a, 9b, 9c) furthermore comprises a projecting element (13) suitable for coupling with a further seat (14) with substantially conjugate profile.

5. Device according to one of claims 1) to 4) **characterised in that** said second element (11, 11a, 11b, 11c) presents a side aperture (40) suitable for permitting coupling/decoupling of said connection means (8).

6. Device according to any one of the preceding claims **characterised in that** said articulation means (4) comprise a joint with at least two degrees of freedom.

7. Device according to claim 6) **characterised in that** said joint allows said lifting means (3) to rotate with respect to a first substantially horizontal axis (15) and to translate along a second axis (16) substantially square or transverse to said first axis (15) to permit coupling and decoupling of said connection means (9, 11).

8. Device according to claim 6) or 7) **characterised in that** said joint comprises a pin (17) integral with said fixing element (2) which engages in a shaped through hole (18) made in a bracket (18a) integral with the lifting means (3).

9. Device according to claims 6) or 7) **characterised in that** said articulation means (4) comprise a pin (17) integral with said fixing element and suitable for engaging in a hole (18) made on said first connection element (9a).

10. Device according to any one of the preceding claims **characterised in that** said articulation means (4) comprise at least one guide element (19) cooperating with said lifting means to position said device in said folded and work positions.

11. Device according to any one of the preceding claims **characterised in that** said articulation means (4) furthermore comprise at least one guide element (19) cooperating with said lifting means to provide coupling and decoupling of said connection means.

12. Device according to claim 10) or 11) **characterised in that** said at least one guide element (19) cooperates with said lifting means to contribute to supporting said lifting means (3) in the rest position.

13. Device according to one of claims 10) to 12) **characterised in that** said at least one guide element (19) comprises a guide rod (20) suitable for rotating around a rotation axis (22) substantially parallel to the rotation axis (15) of said lifting means (3) and having one end (20b) suitable for positioning in contact with said at least one supporting element (5).

14. Device according to claim 12) **characterised in that** said at least one guide element (19) comprises at least one telescopic rod (20d) having one first end (20a) hinged to a pin (21) identifying a rotation axis (22) substantially parallel to said rotation axis (15) of said lifting means (3) and the other end connected to said supporting element (5) by means of another hinge (30).

15. Device according to claim 13) or 14) **characterised in that** the rotation axis (22) of said at least one guide element is positioned below the horizontal plane that intersects said rotation axis (15) of said lifting means (3) and in the semi-space formed by the vertical plane passing through said rotation axis (15) which is not involved in the rotation of said lifting means (3).

16. Device according to any one of the preceding claims **characterised in that** said lifting means (3) comprise a jack (6).

17. Device according to claim 16) **characterised in that** said jack (6) is of the mechanical and/or hydraulic and/or pneumatic type.

18. Device according to claim 12) **characterised in that** said mechanical jack (6) is of the screw type.

19. Device according to claim 18) **characterised in that** said lifting means (3) furthermore comprise an electric motor 25 suitable for driving said jack powered by the electrical system of said vehicle and/or by additional accumulators and/or generators.

20. Device according to any one of the preceding claims **characterised in that** said lifting means (3) are controlled by a control unit via a remote control device.

21. Device according to any one of the preceding claims **characterised in that** said device furthermore comprises elastic means (26) cooperating with said articulation means (4) during lifting and/or positioning substantially square to the ground of said lifting means (3).

22. Device according to claim 21) **characterised in that** said elastic means comprise at least one helical spring (27) having one end (28) integral with said lifting means (3) and the other end (29) integral with said guide element (19).

23. Device according to any one of the preceding claims **characterised in that** said device furthermore comprises means suitable for detecting when said device has reached the rest position and blocking said lifting means.

24. Device according to any one of the preceding claims **characterised in that** said lifting means (3) can be manually activated.

25. Device according to any one of the preceding claims **characterised in that** in said folded position said lifting axis (7) is substantially horizontal and/or parallel to the ground (S).

26. Device according to any one of the preceding claims **characterised in that** said rigid connection is obtained by exploiting the movement of said lifting means (3).

27. Device according to any one of the preceding claims **characterised in that** the movement of said lifting means from said folded position to said work position is obtained by exploiting the movement of said lifting means (3).

28. Lifting, stabilising and levelling system for a vehicle comprising a control unit (50) and at least one lifting/stabilising device (1, 100, 200) **characterised in that** said at least one lifting and stabilising device is carried out according to any one of the preceding claims.

29. System according to claim 28) **characterised in that** said control unit (50) also comprises an apparatus suitable for perceiving any slanting of the vehicle in its two longitudinal and transverse axes and for cooperating with a processing unit which controls said lifting/stabilising devices to adjust said devices by raising/lowering them until obtaining levelling of said vehicle.

30. System according to claim 28) or 29) **characterised in that** said control unit (50) is furthermore provided with a control panel (51) for activation in local mode and/or of a radio receiver unit cooperating with a corresponding radio transmission unit (52), for remote activation of the system.

31. Process for lifting a vehicle by means of a lifting and/or stabilising device (1, 100, 200) of the type comprising:
- at least one fixing element (2) for anchoring said device to said vehicle;
- lifting means (3) provided with an actuator (6) suitable for moving at least one supporting element (5) along a lifting axis (7) to lift said vehicle;
- articulation means (4) suitable for allowing said lifting means (3) to move from at least one first folded position, in which said lifting axis (7) is not square to the ground (S), to at least one second work position in which said lifting axis (7) is in a position substantially square to the ground (S);
- before lifting said vehicle said lifting means are connected rigidly to said fixing element exploiting the movement of said lifting means, by means of a male-female coupling;
**characterised in that** said coupling comprises a first connection element (9, 9a, 9b, 9c) with a truncated cone-shaped head (10) suitable for coupling with a second connection element (11, 11a, 11b, 11c) comprises a corresponding truncated cone-shaped seat (12, 12c) with substantially conjugate profile.

## Patentansprüche

1. Hub- und/oder Stabilisiervorrichtung (1, 100, 200) für Fahrzeuge im Allgemeinen, Folgendes umfassend:
- wenigstens ein Befestigungselement (2) zur Verankerung der besagten Vorrichtung an besagtem Fahrzeug;
- Hubmittel (3) mit einem Aktuator (6), geeignet zur Bewegung von wenigstens einem Abstützelement (5) entlang einer Hubachse (7) zum Heben des besagten Fahrzeugs;
- Gelenkmittel (4), dazu geeignet, den besagten Hubmitteln (3) die Bewegung aus wenigstens einer ersten, zusammengeklappten Position, in der die besagte Hubachse (7) nicht rechtwinklig zum Boden (S) steht, in wenigstens eine zweite Arbeitsposition zu ermöglichen, in der die besagte Hubachse (7) sich in einer im Wesentlichen rechtwinkligen Position zum Boden (S) befinde;
- Verbindungsmittel (8), dazu geeignet, die besagten Hubmittel (3) während des Hebens von besagtem Fahrzeug starr mit besagtem Befestigungselement (2) zu verbinden, und eine Hohlsteckkupplung mit einem ersten Verbindungselement (9, 9a, 9b, 9c) und einem zweiten Verbindungselement (11, 11a, 11b, 11c) umfassend, wobei das besagte erste Verbindungselement (9, 9a, 9b, 9c) geeignet ist, mit dem besagten zweiten Verbindungselement (11, 11a, 11b, 11c) gekuppelt zu werden,
**dadurch gekennzeichnet, dass** das besagte erste Element (9, 9a, 9b, 9c) einen kegelstumpfförmigen Kopf (10) umfasst, und das besagte zweite Element (11, 11a, 11b, 11c) eine entsprechende, kegelstumpfförmige Aufnahme (12, 12c) mit einem im Wesentlichen konjugierten Profil umfasst.

2. Vorrichtung gemäß Patentanspruch 1), **dadurch gekennzeichnet, dass** das besagte erste Verbindungselement (9, 9a, 9b, 9c) eine Einheit mit den besagten Hubmitteln (3) bildet und dadurch, dass das besagte zweite Verbindungselement (11, 11a, 11b, 11c) eine Einheit mit dem wenigstens einen Befestigungselement (2) bildet.

3. Vorrichtung gemäß Patentanspruch 1), **dadurch gekennzeichnet, dass** das besagte erste Verbindungselement (9, 9a, 9b, 9c) eine Einheit mit dem wenigstens einen Befestigungselement (2) bildet, und dadurch, dass das besagte zweite Verbindungselement (11, 11a, 11b, 11c) eine Einheit mit den besagten Hubmitteln (3) bildet.

4. Vorrichtung gemäß eines der Patentansprüche von 1) bis 3), **dadurch gekennzeichnet, dass** das besagte erste Element (9, 9a, 9b, 9c) des Weiteren ein hervorstehendes Element (13) umfasst, das geeignet ist, mit einer weiteren Aufnahme (14) mit einem im Wesentlichen konjugierten Profil gekuppelt zu werden.

5. Vorrichtung gemäß eines jeglichen der Patentansprüche von 1) bis 4), **dadurch gekennzeichnet, dass** das besagte zweite Element (11, 11a, 11b, 11c) eine Seitenöffnung (40) aufweist, die geeignet ist, die Ein- und Auskupplung der besagten Verbindungsmittel (8) zu erlauben.

6. Vorrichtung gemäß eines jeden der vorstehenden Patentansprüche, **dadurch gekennzeichnet, dass** die besagten Gelenkmittel (4) ein Gelenk mit wenigstens zwei Freiheitsgraden umfassen.

7. Vorrichtung gemäß Patentanspruch 6), **dadurch gekennzeichnet, dass** das besagte Gelenk den besagten Hubmitteln (3) erlaubt, sich bezüglich einer ersten, im Wesentlichen waagerechten Achse (15) zu drehen und entlang einer zweiten, im Wesentlichen rechtwinklig oder quer zu der besagten ersten Achse (15) stehenden Achse (16) zu laufen, um die Ein- und Auskupplung der besagten Verbindungsmittel (9, 11) zu erlauben.

8. Vorrichtung gemäß Patentanspruch 6) oder 7), **dadurch gekennzeichnet, dass** das besagte Gelenk einen mit dem besagten Befestigungselement (2) eine Einheit bildenden Zapfen (17) umfasst, der in eine geformte Durchgangsbohrung (18) in einem Bügel (18a) eingreift, welcher eine Einheit mit den besagten Hubmitteln (3) bildet.

9. Vorrichtung gemäß Patentanspruch 6) oder 7), **dadurch gekennzeichnet, dass** die besagten Gelenkmittel (4) einen Zapfen (17) umfassen, der mit dem besagten Befestigungselement eine Einheit bildet und geeignet ist, in eine Bohrung (18) in dem besagten ersten Verbindungselement (9a) einzugreifen.

10. Vorrichtung gemäß eines jeglichen der vorstehenden Patentansprüche, **dadurch gekennzeichnet, dass** die besagten Gelenkmittel (4) wenigstens ein Führungselement (19) umfassen, das mit den besagten Hubmitteln zusammenwirkt, um die besagte Vorrichtung in die besagte zusammengeklappte Position und in die Arbeitsposition zu bringen.

11. Vorrichtung gemäß eines jeglichen der vorstehenden Patentansprüche, **dadurch gekennzeichnet, dass** die besagten Gelenkmittel (4) des Weiteren wenigstens ein Führungselement (19) umfassen, das mit den besagten Hubmitteln zusammenwirkt, um das Ein- und Auskuppeln der besagten Verbindungsmittel zu erzielen.

12. Vorrichtung gemäß Patentanspruch 10) oder 11), **dadurch gekennzeichnet, dass** das wenigstens eine Führungselement (19) mit den besagten Hubmitteln zusammenwirkt, um dazu beizutragen, die besagten Hubmittel (3) in der Ruheposition abzustützen.

13. Vorrichtung gemäß eines der Patentansprüche von 10) bis 12), **dadurch gekennzeichnet, dass** das wenigstens eine Führungselement (19) eine Führungsstange (20) umfasst, die geeignet ist, sich um eine im Wesentlichen zur Drehachse (15) der besagten Hubmittel (3) parallele Drehachse (22) zu drehen und das ein Ende (20b) aufweist, das geeignet ist, sich in Kontakt mit dem wenigsten einen Abstützelement (5) zu positionieren.

14. Vorrichtung gemäß Patentanspruch 12), **dadurch gekennzeichnet, dass** das wenigstens eine Führungselement (19) wenigstens eine Teleskopstange (20d) umfasst, deren erstes Ende (20a) an einen Zapfen (21) angelenkt ist, der eine im Wesentlichen zu der besagten Drehachse (15) der besagten Hubmittel (3) parallele Drehachse (22) definiert, und deren anderes Ende mittels eines anderen Gelenks (30) mit dem besagten Abstützelement (5) verbunden ist.

15. Vorrichtung gemäß Patentanspruch 13) oder 14), **dadurch gekennzeichnet, dass** die Drehachse (22) des besagten wenigstens einen Führungselements unterhalb der waagerechten Ebene positioniert ist, welche die besagte Drehachse (15) der besagten Hubmittel (3) schneidet, sowie in dem durch die senkrechte, die besagte, nicht an der Drehung der besagten Hubmittel (3) beteiligten Drehachse (15) passierende Ebene gebildeten Raumhälfte.

16. Vorrichtung gemäß eines jeglichen der vorstehenden Patentansprüche, **dadurch gekennzeichnet, dass** die besagten Hubmittel (3) eine Winde (6) umfassen.

17. Vorrichtung gemäß Patentanspruch 16), **dadurch gekennzeichnet, dass** die besagte Winde (6) mechanischer und/oder hydraulischer und/oder pneumatischer Art ist.

18. Vorrichtung gemäß Patentanspruch 16), **dadurch gekennzeichnet, dass** die besagte mechanische Winde (6) eine Schraubenwinde ist.

19. Vorrichtung gemäß Patentanspruch 18), **dadurch gekennzeichnet, dass** die besagten Hubmittel (3) des Weiteren einen Elektromotor (25) umfassen, der geeignet ist, die besagte Winde anzutreiben, und der durch die elektrische Anlage des besagten Fahrzeugs und/oder durch zusätzliche Akkumulatoren und/oder Generatoren gespeist wird.

20. Vorrichtung gemäß eines jeglichen der vorstehenden Patentansprüche, **dadurch gekennzeichnet, dass** die besagten Hubmittel (3) über eine Femsteuerungsvorrichtung durch ein Steuergerät kontrolliert werden.

21. Vorrichtung gemäß eines jeglichen der vorstehenden Patentansprüche, **dadurch gekennzeichnet, dass** die besagte Vorrichtung des Weiteren elastische Mittel (26) umfasst, die während des Hebens und/oder der im Wesentlichen rechtwinklig zum Boden erfolgenden Positionierung der besagten Hubmittel (3) mit den besagten Gelenkmitteln (4) zusammenwirken.

22. Vorrichtung gemäß Patentanspruch 21), **dadurch gekennzeichnet, dass** die besagten elastischen Mittel wenigstens eine Schraubenfeder (27) umfassen, deren ein Ende (28) mit den besagten Hubmitteln (3) eine Einheit bildet, und deren anderes Ende (29) mit dem besagten Führungselement (19) eine Einheit bildet.

23. Vorrichtung gemäß eines jeglichen der vorstehenden Patentansprüche, **dadurch gekennzeichnet, dass** die besagte Vorrichtung des Weiteren Mittel umfasst, die geeignet sind, festzustellen, wann die besagte Vorrichtung die Ruheposition erreicht hat, und die besagten Hubmittel zu blockieren.

24. Vorrichtung gemäß eines jeglichen der vorstehenden Patentansprüche, **dadurch gekennzeichnet, dass** die besagten Hubmittel (3) manuell aktivierbar sind.

25. Vorrichtung gemäß eines jeglichen der vorstehenden Patentansprüche, **dadurch gekennzeichnet, dass** die besagte Hubachse (7) in der besagten, zusammengeklappten Position im Wesentlichen waagerecht und/oder parallel zum Boden (S) steht.

26. Vorrichtung gemäß eines jeglichen der vorstehenden Patentansprüche, **dadurch gekennzeichnet, dass** die besagte, starre Verbindung durch Nutzung der Bewegung der besagten Hubmittel (3) erzielt wird.

27. Vorrichtung gemäß eines jeglichen der vorstehenden Patentansprüche, **dadurch gekennzeichnet, dass** die Bewegung der besagten Hubmittel aus der besagten zusammengeklappten Position in die besagte Arbeitsposition durch Nutzung der Bewegung der besagten Hubmittel (3) erzielt wird.

28. System zum Heben, Stabilisieren und Nivellieren für ein Fahrzeug, ein Steuergerät (50) umfassend sowie wenigstens eine Hub-/Stabilisiervorrichtung (1, 100, 200), **dadurch gekennzeichnet, dass** diese wenigstens eine Hub-und Stabilisiervorrichtung gemäß eines jeglichen der vorstehenden Patentansprüche ausgeführt ist.

29. System gemäß Patentanspruch 28), **dadurch gekennzeichnet, dass** das besagte Steuergerät (50) auch einen Apparat umfasst, der geeignet ist, jegliche Neigung des Fahrzeugs an seiner Längs- und an seiner Querachse wahrzunehmen und mit einer Datenverarbeitungseinheit zusammenzuarbeiten, welche die besagten Hub-/Stabilisiervorrichtungen steuert, um die besagten Vorrichtungen durch Heben/Senken derselben zu korrigieren, bis das besagte Fahrzeug nivelliert ist.

30. System gemäß Patentanspruch 28 oder 29), **dadurch gekennzeichnet, dass** das besagte Steuergerät (50) des Weiteren mit einem Steuerpult (51) versehen ist, um im lokalen Modus das System zu aktivieren und/oder mit einer Funkempfangseinheit, welche mit einer entsprechenden Funksendeeinheit (52 zusammenarbeitet, um das System fernzusteuern.

31. Verfahren zum Anheben eines Fahrzeugs durch eine Hub- und/oder Stabilisiervorrichtung (1, 100, 200) des Typs, der Folgendes umfasst:
- wenigstens ein Befestigungselement (2) zur Verankerung der besagten Vorrichtung an besagtem Fahrzeug;
- Hubmittel (3) mit einem Aktuator (6), geeignet zur Bewegung von wenigstens einem Abstützelement (5) entlang einer Hubachse (7) zum Heben des besagten Fahrzeugs;
- Gelenkmittel (4), dazu geeignet, den besagten Hubmitteln (3) die Bewegung aus wenigstens einer ersten, zusammengeklappten Position, in der die besagte Hubachse (7) nicht rechtwinklig zum Boden (S) steht, in wenigstens eine zweite Arbeitsposition zu ermöglichen, in der die besagte Hubachse (7) sich in einer im Wesentlichen rechtwinkligen Position zum Boden (S) befindet;
- vor dem Anheben des besagten Fahrzeugs werden die besagten Hubmittel unter Nutzung der Bewegung der besagten Hubmittel selbst starr mittels einer Hohlsteckkupplung mit dem besagten Befestigungselement verbunden,
**dadurch gekennzeichnet, dass** die besagte Kupplung ein erstes Verbindungselement (9, 9a, 9b, 9c) mit einem kegelstumpfförmigen Kopf (10) umfasst, das geeignet ist, mit einem zweiten Verbindungselement (11, 11a, 11b, 11c) gekuppelt zu werden, welches eine entsprechende, kegelstumpfförmige Aufnahme (12, 12c) mit einem im Wesentlichen konjugierten Profil umfasst.

## Revendications

1. Dispositif de levage et/ou stabilisation (1, 100, 200) pour véhicules en général, comprenant :
- au moins un élément de fixation (2) pour l'ancrage dudit dispositif audit véhicule ;
- des moyens de levage (3) dotés d'un actionneur (6) apte à déplacer au moins un élément de support (5) le long d'un axe de levage (7) pour lever ledit véhicule ;
- des moyens d'articulation (4) aptes à consentir auxdits moyens de levage (3) de se déplacer d'au moins une première position repliée, dans laquelle ledit axe de levage (7) n'est pas orthogonal au sol (S), à au moins une deuxième position de travail dans laquelle ledit axe de levage (7) se trouve dans une position essentiellement orthogonale au sol (S) ;
- des moyens de connexion (8) aptes à relier de manière rigide lesdits moyens de levage (3) audit élément de fixation (2) durant le levage dudit véhicule et comprenant un accouplement du type mâle-femelle avec un premier élément de connexion (9, 9a, 9b, 9c) et un deuxième élément de connexion (11, 11a, 11b, 11c), ledit premier élément de connexion (9, 9a, 9b, 9c) étant apte à s'accoupler avec ledit deuxième élément de connexion (11, 11a, 11b, 11c) ;
**caractérisé en ce que** ledit premier élément (9, 9a, 9b, 9c) comprend une tête tronconique (10) et ledit deuxième élément (11, 11a, 11b, 11c) comprend un siège tronconique (12, 12c) correspondant avec profil essentiellement conjugué.

2. Dispositif selon la revendication 1), **caractérisé en ce que** ledit premier élément de connexion (9, 9a, 9b, 9c) est solidaire desdits moyens de levage (3) et **en ce que** ledit deuxième élément de connexion (11, 11a, 11b, 11c) est solidaire dudit au moins un élément de fixation (2).

3. Dispositif selon la revendication 1), **caractérisé en ce que** ledit premier élément de connexion (9, 9a, 9b, 9c) est solidaire dudit au moins un élément de fixation (2) et **en ce que** ledit deuxième élément de connexion (11, 11a, 11b, 11c) est solidaire desdits moyens de levage (3).

4. Dispositif selon l'une des revendications de 1) à 3), **caractérisé en ce que** ledit premier élément (9, 9a, 9b, 9c) comprend également un élément saillant (13) apte à s'accoupler avec un siège ultérieur (14) avec profil essentiellement conjugué.

5. Dispositif selon l'une des revendications de 1) à 4), **caractérisé en ce que** ledit deuxième élément (11, 11a, 11b, 11c) présente une ouverture latérale (40) apte à permettre l'accouplement/désaccouplement desdits moyens de connexion (8).

6. Dispositif selon l'une quelconque des revendications précédentes, **caractérisé en ce que** lesdits moyens d'articulation (4) comprennent un joint avec au moins deux degrés de liberté.

7. Dispositif selon la revendication 6), **caractérisé en ce que** ledit joint permet auxdits moyens de levage (3) de tourner par rapport à un premier axe (15) essentiellement horizontal et de se déplacer par translation le long d'un deuxième axe (16) essentiellement orthogonal ou transversal audit premier axe (15) pour consentir l'accouplement et le désaccouplement desdits moyens de connexion (9, 11).

8. Dispositif selon la revendication 6) ou 7), **caractérisé en ce que** ledit joint comprend un pivot (17) solidaire dudit élément de fixation (2) qui s'engage dans un trou passant galbé (18) réalisé dans une bride (18a) solidaire des moyens de levage (3).

9. Dispositif selon la revendication 6) ou 7), **caractérisé en ce que** lesdits moyens d'articulation (4) comprennent un pivot (17) solidaire dudit élément de fixation et apte à s'engager dans un trou (18) réalisé sur ledit premier élément de fixation (9a).

10. Dispositif selon l'une quelconque des revendications précédentes, **caractérisé en ce que** lesdits moyens d'articulation (4) comprennent au moins un élément de guidage (19) coopérant avec lesdits moyens de levage pour positionner ledit dispositif dans lesdites positions repliée et de travail.

11. Dispositif selon l'une quelconque des revendications précédentes, **caractérisé en ce que** lesdits moyens d'articulation (4) comprennent également au moins un élément de guidage (19) coopérant avec lesdits moyens de levage pour réaliser l'accouplement et le désaccouplement desdits moyens de connexion.

12. Dispositif selon la revendication 10) ou 11), **caractérisé en ce que** ledit au moins un élément de guidage (19) coopère avec lesdits moyens de levage pour contribuer au support desdits moyens de levage (3) dans la position de repos.

13. Dispositif selon l'une des revendications de 10) à 12), **caractérisé en ce qu'**au moins un élément de guidage (19) comprend une tige de guidage (20) apte à tourner autour d'un axe de rotation (22) essentiellement parallèle à l'axe de rotation (15) desdits moyens de levage (3) et ayant une extrémité (20b) apte à être mise en contact avec ledit au moins un élément de support (5).

14. Dispositif selon la revendication 12), **caractérisé en ce que** ledit au moins un élément de guidage (19) comprend au moins une tige télescopique (20d) ayant une première extrémité (20a) fixée avec charnière à un pivot (21) identifiant un axe de rotation (22) essentiellement parallèle audit axe de rotation (15) desdits moyens de levage (3) et l'autre extrémité reliée audit élément de support (5) au moyen d'une autre charnière (30).

15. Dispositif selon la revendication 13) ou 14), **caractérisé en ce que** l'axe de rotation (22) dudit au moins un élément de guidage est positionné au-dessous du plan horizontal qui coupe ledit axe de rotation (15) desdits moyens de levage (3) et dans le demi-espace formé par le plan vertical passant à travers ledit axe de rotation (15) qui n'est pas concerné par la rotation desdits moyens de levage (3).

16. Dispositif selon l'une quelconque des revendications précédentes, **caractérisé en ce que** lesdits moyens de levage (3) comprennent un vérin (6).

17. Dispositif selon la revendication 16), **caractérisé en ce que** ledit vérin (6) est du type mécanique et/ou hydraulique et/ou pneumatique.

18. Dispositif selon la revendication 16), **caractérisé en ce que** ledit vérin mécanique (6) est du type à vis.

19. Dispositif selon la revendication 18), **caractérisé en ce que** lesdits moyens de levage (3) comprennent également un moteur électrique (25) apte à actionner ledit vérin alimenté par le système électrique dudit véhicule et/ou par des accumulateurs et/ou générateurs supplémentaires.

20. Dispositif selon l'une quelconque des revendications précédentes, **caractérisé en ce que** lesdits moyens de levage (3) sont commandés par une unité de commande au moyen d'un dispositif de commande à distance.

21. Dispositif selon l'une quelconque des revendications précédentes, **caractérisé en ce que** ledit dispositif comprend également des moyens élastiques (26) coopérant avec lesdits moyens d'articulation (4) durant le levage et/ou le positionnement essentiellement orthogonal au sol desdits moyens de levage (3).

22. Dispositif selon la revendication 21), **caractérisé en ce que** lesdits moyens élastiques comprennent au moins un ressort hélicoïdal (27) ayant une extrémité (28) solidaire desdits moyens de levage (3) et l'autre extrémité (29) solidaire dudit élément de guidage (19).

23. Dispositif selon l'une quelconque des revendications précédentes, **caractérisé en ce que** ledit dispositif comprend également des moyens aptes à détecter quand ledit dispositif a atteint la position de repos et à bloquer lesdits moyens de levage.

24. Dispositif selon l'une quelconque des revendications précédentes, **caractérisé en ce que** lesdits moyens de levage (3) peuvent être actionnés manuellement.

25. Dispositif selon l'une quelconque des revendications précédentes, **caractérisé en ce que** dans ladite position repliée ledit axe de levage (7) est essentiellement horizontal et/ou parallèle au sol (S).

26. Dispositif selon l'une quelconque des revendications précédentes, **caractérisé en ce que** ladite connexion rigide est obtenue en exploitant le mouvement desdits moyens de levage (3).

27. Dispositif selon l'une quelconque des revendications précédentes, **caractérisé en ce que** le mouvement desdits moyens de levage de ladite position repliée à ladite position de travail est obtenu en exploitant le mouvement desdits moyens de levage (3).

28. Système de levage, stabilisation et nivelage pour un véhicule comprenant une unité de commande (50) et au moins un dispositif de levage/stabilitation (1, 100, 200,) **caractérisé en ce que** ledit au moins un dispositif de levage et stabilisation est réalisé selon l'une quelconque des revendications précédentes.

29. Système selon la revendication 28), **caractérisé en ce que** ladite unité de commande (50) comprend également un apparareil apte à percevoir des inclinaisons éventuelles du véhicule dans ses deux axes longitudinal et transversal et à coopérer avec une unité d'élaboration qui commande lesdits dispositifs de lavage/stabilisation pour régler lesdits dispositifs en les levant/abaissant jusqu'à obtenir le nivelage dudit véhicule.

30. Système selon la revendication 28) ou 29), **caractérisé en ce que** ladite unité de commande (50) est dotée en outre d'un tableau de commande (51) pour l'activation en mode local et/ou d'une unité de récepteur radio coopérant avec une unité de transmission radio (52) correspondante, pour l'activation à distance du système.

31. Processus de levage d'un véhicule au moyens d'un dispositif de levage et/ou stabilisation (1, 100, 200) du type comprenant :
- au moins un élément de fixation (2) pour l'ancrage dudit dispositif audit véhicule ;
- des moyens de levage (3) dotés d'un actionneur (6) apte à déplacer au moins un élément de support (5) le long d'un axe de levage (7) pour lever ledit véhicule ;
- des moyens d'articulation (4) aptes à permettre auxdits moyens de levage (3) de se déplacer d'au moins une première position repliée, dans laquelle ledit axe de levage (7) n'est pas orthogonal au sol (S), à au moins une deuxième position de travail, dans laquelle ledit axe de levage (7) se trouve dans une position essentiellement orthogonale au sol (S) ;
- avant de lever ledit véhicule lesdits moyens de levage sont reliés de manière rigide audit élément de fixation en exploitant le mouvement desdits moyens de levage, par un accouplement mâle-femelle ;
**caractérisé en ce que** ledit accouplement comprend un premier élément de connexion (9, 9a, 9b, 9c) avec une tête tronconique (10) apte à s'accoupler avec un deuxième élément de connexion (11, 11a, 11b, 11c) qui comprend un siège tronconique (12, 12c) correspondant avec profil essentiellement conjugué.
